# EUROPEAN PATENT APPLICATION

(11) **EP 2 329 872 A2**
(43) Date of publication of application: **08.06.2011**
(21) Application number: 10193002.2
(22) Date of filing: 29.11.2010
(51) Int. Cl.: B01D 29/23, B01D 29/60, B01D 29/68

(54) **Systems and methods associated with straining a pipeline**

(30) Priority: 03.12.2009 US 630306
(71) Applicant: GE-Hitachi Nuclear Energy Americas LLC, Wilmington, NC 28401 (US)
(72) Inventor: Gardner, Eric Rankin, Wilmington, NC 28401 (US); Pappone, Daniel C., San Jose, CA 95125 (US); Yan, Jin, Wilmington, NC 28401 (US); Hwang, Heh-Lin, Sunol, CA 94586 (US)
(74) Representative: Gray, Thomas

(57) **Abstract**

A system associated with straining media in a pipeline (10) includes a perforated plate (20) with perforations (50) that are configured to remove debris from media. The perforations (50) include an inlet edge (70) that is chamfered. The inlet edge (70) is an upstream edge with respect to a flow direction of the media.

## Description

### TECHNICAL FIELD

The subject matter disclosed herein relates generally to industrial processes and equipment and more specifically to systems and methods for straining or filtering a pipeline.

### BACKGROUND

Many industrial processes and equipment utilize pipeline systems for circulating water, steam, or other media for various purposes. Such systems may include sensitive components such as regulators, steam traps, meters, pumps, and other equipment that can be damaged by debris that can enter the system from a variety of sources.

### SUMMARY

The various embodiments of the present disclosure remove small debris from high velocity flows while maintaining low pressure drop, providing structural support, monitoring debris accumulation, and providing in-line cleaning.

According to one embodiment, a system associated with straining media in a pipeline includes a perforated plate including perforations configured to remove debris from media. The perforations include an inlet edge that is chamfered. The inlet edge of each of the perforations is an upstream edge with respect to a flow direction of the media.

According to another embodiment, a system associated with straining media in a pipeline includes a perforated plate including perforations configured to remove debris from media and a support mesh positioned adjacent the downstream surface of the perforated plate. The downstream surface is with respect to a flow direction of the media.

The foregoing has broadly outlined some of the aspects and features of the present disclosure, which should be construed to be merely illustrative of various potential applications. Other beneficial results can be obtained by applying the disclosed information in a different manner or by combining various aspects of the disclosed embodiments. Accordingly, other aspects and a more comprehensive understanding may be obtained by referring to the detailed description of the exemplary embodiments taken in conjunction with the accompanying drawings, in addition to the scope defined by the claims.

### DESCRIPTION OF THE DRAWINGS

There follows a detailed description of embodiments of the invention by way of example only with reference to the accompanying drawings, in which:
FIG. 1 is an exploded perspective view of a pipeline with an inline strainer, according to an exemplary embodiment.
FIG. 2 is an elevational cross-sectional view of the pipeline and inline strainer of FIG. 1.
FIG. 3 is a partial cross sectional view of a perforation of a perforated plate of the inline strainer of FIG. 2.
FIG. 4 is a graphical illustration of the force on a perforated plate of the inline strainer of FIG. 1.
FIG. 5 is a partial plan view of a perforated plate and woven mesh of the inline strainer of FIG. 1.

### DETAILED DESCRIPTION

As required, detailed embodiments are disclosed herein. It must be understood that the disclosed embodiments are merely exemplary of the disclosure that may be embodied in various and alternative forms, and combinations thereof. As used herein, the word "exemplary" is used expansively to refer to embodiments that serve as illustrations, specimens, models, or patterns. The figures are not necessarily to scale and some features may be exaggerated or minimized to show details of particular components. In other instances, well-known components, systems, materials, or methods have not been described in detail in order to avoid obscuring the present disclosure. Therefore, specific structural and functional details disclosed herein are not to be interpreted as limiting, but merely as a basis for the claims and as a representative basis for teaching one skilled in the art.

The embodiments of the present disclosure are described in the context of a boiling water reactor. However, the teachings are also applicable to other pipelines of other industrial processes to remove small debris from media flowing at a high speed while minimizing pressure drop. Typically, such pipelines have medium or large diameters.

As an example, the embodiments described herein remove particulates with a size or diameter greater than 0.045 inches from feedwater flowing at a speed in the range of 21.5 feet/sec resulting in a pressure drop of around 3.5 psi. It should be understood that the advantages of the teachings described herein are realized for different mediums, flow speeds (e.g., 0-26 feet/sec), particulate sizes, and pressure drop requirements (e.g., 2-5 psi).

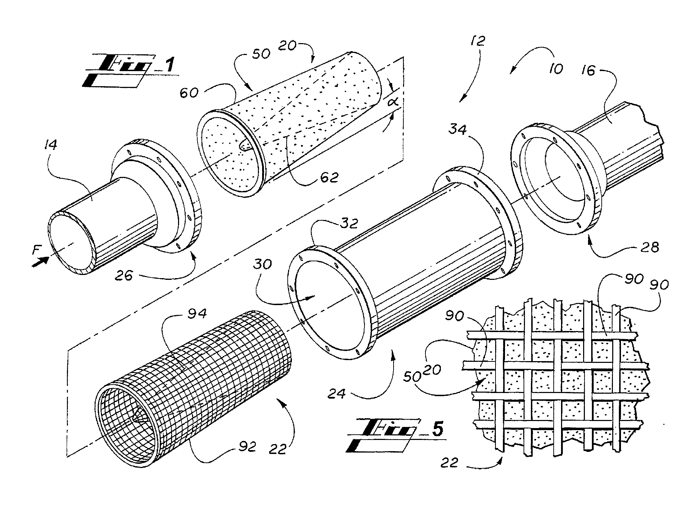

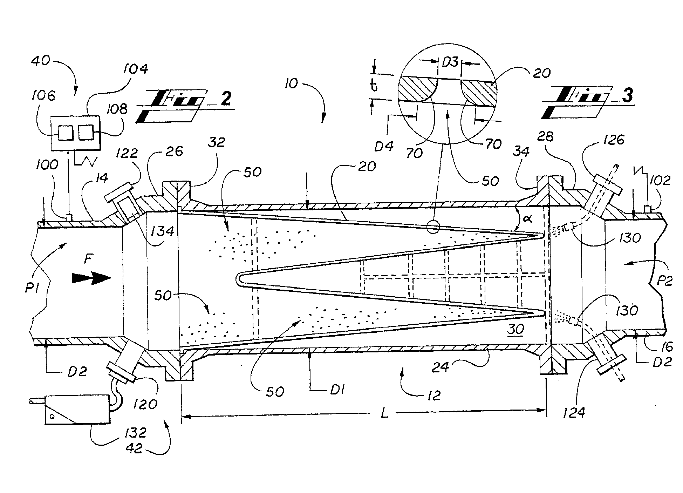

Referring to FIGs. 1 and 2, a pipeline 10 includes an inline strainer 12 in between an upstream pipe section 14 and a downstream pipe section 16. The inline strainer 12 includes a perforated plate 20, a support mesh 22, a strainer housing 24, an expander flange 26, and a reducer flange 28. The support mesh 22 is configured to fit closely around the perforated plate 20 in a sheath-like manner to provide a composite straining structure 20, 22. The composite straining structure 20, 22 sets in a chamber 30 of the strainer housing 24. The strainer housing 24 is substantially cylindrical and includes flanges 32, 34 at opposed ends. The flange 32 attaches to the expander flange 26 and the flange 34 attaches to the reducer flange 28.

Media, such as air or water, flows through the pipeline 10 and is filtered by the inline strainer 12. Media flows in flow direction F so as to enter the inline strainer 12 through the expander flange 26, pass through the perforated plate 20, and exit the inline strainer 12 through the reducer flange 28. As described in further detail below, the inline strainer 12 is configured to minimize a pressure drop Dp across the inline strainer 12, minimize the size of perforations of the perforated plate 20, and maximize the flow rate of media through the inline strainer 12. The pressure drop Dp across the inline strainer 12 is monitored by a measurement system 40. The inline strainer 12 is cleaned by a maintenance system 42.

Debris can include larger objects such as nuts, bolts, turnings, platelets, wires, and tools. The inline strainer 12 is configured to withstand the impact of such objects as they are propelled by a high speed media flow. The perforated plate 20 is tapered at an angle α such that large objects glance off the wall of the perforated plate 20 rather than squarely contacting the wall of the perforated plate 20. Further, the support mesh 22 supports the wall of the perforated plate 20. Generally, larger objects do not block perforations and generate negligible pressure drop Dp across the inline strainer 12.

Debris can also include smaller organic and inorganic particulates that are high lift and low mass so as to travel with the media flow. Such particulates are trapped in and block perforations 50 (FIG. 3) as media flows through the perforated plate 20. Accumulation of smaller debris in the perforations 50 increases pressure drop Dp across the inline strainer 12 and stress on the perforated plate 20.

Referring to FIG. 2, the strainer housing 24 has an inner diameter D1 that is greater than the pipe diameter D2 of the pipe sections 14, 16. The expander flange 26 and the reducer flange 28 couple the pipe sections 14, 16 to the strainer housing 24. The interior of the expander flange 26 expands in the flow direction F from a cross sectional area with diameter D2 to a cross sectional area with diameter D1. The interior of the reducer flange 28 narrows in the flow direction F from a cross sectional area with diameter D1 to a cross sectional area with diameter D2. As media flows through the expander flange 26, from a smaller cross sectional area to a larger cross sectional area, the media flow velocity decreases and the flow pressure remains substantially constant. Slower media flow places less stress on the perforated plate 20 and flows through the perforated plate 20 with less pressure drop Dp. As media flows through the reducer flange 28, the media flow velocity increases and the flow pressure remains substantially constant.

The illustrated perforated plate 20 has an inverted cone shape that is designed to maximize the surface area of the perforated plate 20 over the length L. In alternative embodiments, the perforated plate has an alternative shape such as an accordion, a cone shape with additional inversions or folds, a cone, combinations thereof and the like. Maximizing the surface area allows for more perforations 50 to be formed in the wall of the perforated plate 20, increasing the open area through which media can flow. The inverted cone shape of the perforated plate 20 includes an outer cone 60 that tapers from a larger diameter to a smaller diameter in the downstream direction (flow direction F) and an inner cone 62 that tapers from a larger diameter to a smaller diameter in the upstream direction (opposite flow direction F). The inner cone 62 is disposed inside the outer cone 60 and the downstream ends of the cones 60, 62 are connected.

Referring to FIG. 3, generally, the perforations 50 are configured to allow media to flow therethrough and to block debris from flowing therethrough. Each of the perforations 50 has a chamfered inlet edge 70 such that the perforation 50 narrows in the flow direction F. The inner diameter D4 is larger than the outer diameter D3. The smaller diameter D3 is less that the dimensions of the smallest debris to be removed from the media. For example, the diameter D3 is selected as 0.045 inches. The thickness t of the perforated plate 20 is a function of the diameters of the perforations 50. Due to manufacturing limitations, perforations of a given diameter generally require a plate thickness t equal to or less than the diameter of the perforation diameter. For perforations of smaller diameter, the perforated plate 20 is thinner. For perforations of diameter 0.045 inches, an acceptable thickness is 0.035 inches.

As used herein, the term diameter refers to the largest dimension of a cross-section of an opening of a pipe section, perforation, etc. The scope of the teachings is not limited to openings with circular cross sections. Rather, other cross sectional shapes can be used.

The dimensions of the chamfer of the inlet edge 70 are optimized to allow media to more easily flow through the associated perforation 50. In some embodiments, internal chamfers are characterized by a radius, angle, depth, outer edge width, combinations thereof, and the like. Different combinations have different effects. For example, the dimensions can include angles in the range of 30-60 degrees and depths in the range of 10-25 percent of the thickness t to provided advantages described herein. The illustrated chamfer is a radial chamfer that tapers all the way through the thickness t of the perforated plate 20. In some embodiments, the chamfer or taper only extends part of the way through the thickness.

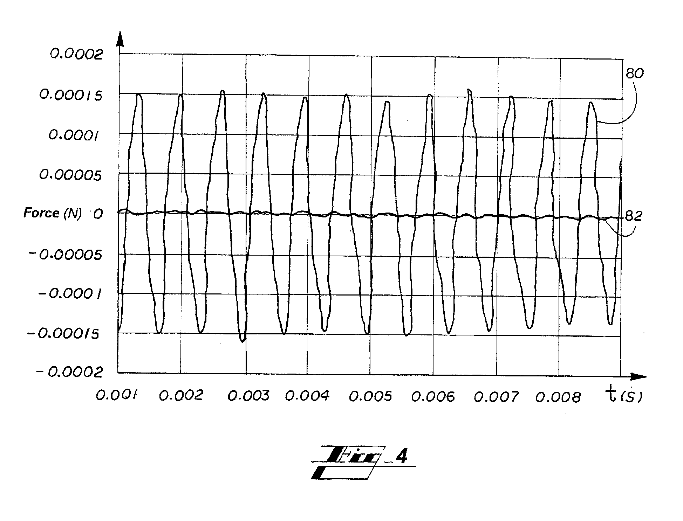

The chamfered inlet edge 70 reduces flow disturbance, pressure drop across the wall of the perforated plate 20, and force on the perforated plate 20. The reduced pressure drop across the wall of the perforated plate 20 reduces the overall pressure drop Dp through the inline strainer 12. FIG. 4 shows oscillating forces on the perforated plate 20 over time t(s) due to flow disturbance. Line 80 represents force on perforated plate 20 for perforations without a chamfered inlet edge and line 82 represents force on perforated plate 20 for perforations 50 with chamfered inlet edges 70. Flow disturbance includes vortices or vortex shedding generated at the outlets of the perforations 50.

Referring to FIGs. 1 and 5, the support mesh 22 has an inverted cone shape like that of the perforated plate 20 includes woven wires 90. The support mesh 22 includes an outer cone 92 and an inner cone 94. When the inline strainer 12 is assembled, the inside, upstream surface of the support mesh 22 abuts the outside, downstream surface of the perforated plate 20. The support mesh 22 provides support such that the thickness t of the perforated plate 20 can be minimized. The outer cone 92 structurally supports the outer cone 60 against hoop stress and the inner cone 94 structurally supports the inner cone 62 against crushing. The support mesh 22 also reinforces the perforated plate 20 to protect against impact from large objects and adds stiffness to the perforated plate to help resist flexural waves generated by vortices. The irregular structure of the support mesh 22 further dampens flexural waves by breaking up the interaction of vortices on the downstream side of the perforated plate 20. The support mesh 22 also offers other advantages. The woven wires 90 distribute a point stress, minimize the potential blockage of perforations 50 (minimize contact with the perforated plate 20), and are less likely to break off and become debris. In some embodiments, the perforated plate 20 is also supported by brace structures (shown by dashed lines) inside the inner cone 94 and between the inner cone 94 and the outer cone 92.

Referring to FIG. 2, the measurement system 40 includes an upstream static pressure probe 100, a downstream pressure probe 102, and a data acquisition unit 104 or computing unit to which the probes 100, 102 are inputs. The data acquisition unit 104 includes a processor 106 and a memory 108 or computer readable media. The memory 108 includes software modules having instructions that, when executed by the processor 106, cause the processor 106 to perform functions described herein.

While the methods described herein may, at times, be described in a general context of computer-executable instructions, the methods of the present disclosure can also be implemented in combination with other program modules and/or as a combination of hardware and software. The term *application,* or variants thereof, is used expansively herein to include routines, program modules, programs, components, data structures, algorithms, and the like. Applications can be implemented on various system configurations, including servers, network systems, single-processor or multiprocessor systems, minicomputers, mainframe computers, personal computers, hand-held computing devices, mobile devices, microprocessor-based, programmable consumer electronics, combinations thereof, and the like.

Computer readable media includes, for example, volatile media, non-volatile media, removable media, and non-removable media. The term *computer-readable media* and variants thereof, as used in the specification and claims, refer to storage media. In some embodiments, storage media includes volatile and/or non-volatile, removable, and/or non-removable media, such as, for example, random access memory (RAM), read-only memory (ROM), electrically erasable programmable read-only memory (EEPROM), solid state memory or other memory technology, CD ROM, DVD, BLU-RAY, or other optical disk storage, magnetic tape, magnetic disk storage or other magnetic storage devices.

The upstream pressure probe 100 is positioned upstream of the inline strainer 12 and measures a first pressure P1 of media flow in the upstream pipe section 14. The downstream pressure probe 102 is positioned downstream of the inline strainer 12 and measures a second pressure P2 of media flow in the downstream pipe section 16. The difference between the first pressure P1 and the second pressure P2 is the overall pressure drop Dp across the inline strainer 12. The data acquisition unit 104 includes a software module that is configured to determine the pressure drop Dp as a function of the pressures P1, P2.

As the inline strainer 12 accumulates debris that blocks the perforations 50, the pressure drop Dp increases. A blockage software module determines the percent blockage of the inline strainer 12 as a function of the pressure drop Dp. For example, the percentage blockage corresponding to pressure drop Dp can be looked up in a table or chart that is stored in the memory 108. The technical effect is that the data acquisition unit 104 determines blockage of the inline strainer 12 as a function of pressure measurements.

An alerting software module is configured to generate an alert for an operator where the percent blockage determined by the blockage software module is above a predetermined threshold. The alert notifies the operator to perform maintenance.

The maintenance system 42 includes a lower upstream port 120, an upper upstream port 122, a lower downstream port 124, and an upper downstream port 126. The upstream ports 120, 122 are positioned at the expander flange 26 and the downstream port 124, 126 are positioned at the reducer flange 28. The downstream ports 124, 126 are configured to receive a sprayer 130 that sprays water upstream to wash debris out of the perforated plate 20 and toward the lower upstream port 120. A collection pan 132 is connected to the lower upstream port 120 and the debris that is washed from the perforated plate 20 drains into the pan 132. The maintenance system 42 includes a camera 134 to facilitate verifying that the debris moves into the lower upstream port 120. The pan 132 is also inspected to verify that debris moves into the lower upstream port 120. In addition, the upper upstream port 122 is configured to receive tools that are used to guide the debris into the lower upstream port 120. According to an alternative exemplary method, the strainer housing 24, the support mesh 22, and the perforated plate 20 are be removed from the pipeline 10 for maintenance.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

For completeness, various aspects of the invention are now set out in the following numbered clauses:
1. A system associated with straining media in a pipeline, comprising:
   a perforated plate comprising perforations configured to remove debris from media, the perforations having an inlet edge that is chamfered, the inlet edge of each of the perforations being an upstream edge with respect to a flow direction of the media.
2. The system of clause 1, wherein the smallest dimension of each of the perforations is substantially equal to or less than 0.045 inches.
3. The system of clause 1, wherein a dimension of the inlet edge of each of the perforations is greater than a dimension of an outer edge of each of the perforations.
4. The system of clause 1, wherein each of the perforations tapers in the flow direction.
5. The system of clause 1, wherein the thickness of the perforated plate is substantially equal to or less than 0.035 inches.
6. The system of clause 1, further comprising a support mesh positioned adjacent the downstream surface of the perforated plate.
7. The system of clause 6, the support mesh comprising woven wires.
8. The system of clause 1, the perforated plate comprising an inverted cone shape.
9. The system of clause 8, further comprising a support mesh positioned adjacent the downstream surface of the perforated plate, the support mesh comprising an inverted cone shape.
10. The system of clause 1, further comprising an expander flange at an upstream end of the perforated plate.
11. The system of clause 10, further comprising a reducer flange at the downstream end of the perforated plate.
12. The system of clause 1, further comprising a first pressure probe positioned on the pipeline upstream of the perforated plate, a second pressure probe positioned on the pipeline downstream of the perforated plate, and a computing unit configured to determine debris accumulation in the perforated plate as a function of pressure measurements of the first pressure probe and the second pressure probe.
13. The system of clause 1, further comprising sprayers positioned downstream of the perforated plate and directed upstream toward the perforated plate and a drain port positioned upstream of the perforated plate.
14. A system associated with straining media in a pipeline, comprising:
   a perforated plate comprising perforations configured to remove debris from media; and
   a support mesh positioned adjacent the downstream surface of the perforated plate, wherein the downstream surface is with respect to a flow direction of the media.
15. The system of clause 14, wherein each of the perforations include a chamfered inlet edge, the chamfered inlet edge being an upstream edge of each of the perforations with respect to the flow direction of the media.
16. The system of clause 15, the support mesh comprising woven wires.
17. The system of clause 16, each of the perforated plate and the support mesh comprising an inverted cone shape.
18. The system of clause 14, wherein the smallest dimension of each of the perforations substantially equal to or less than 0.045 inches.
19. The system of clause 14, wherein the thickness of the perforated plate is substantially equal to or less than 0.035 inches.

## Claims

1. A system associated with straining media in a pipeline, comprising:
a perforated plate (20) comprising perforations (50) configured to remove debris from media, the perforations (50) having an inlet edge (70) that is chamfered, the inlet edge (70) of each of the perforations (70) being an upstream edge with respect to a flow direction of the media.

2. The system of claim 1, wherein the smallest dimension of each of the perforations (50) is substantially equal to or less than 0.045 inches.

3. The system of claim 1 or 2, wherein a dimension of the inlet edge (70) of each of the perforations (50) is greater than a dimension of an outer edge of each of the perforations (50).

4. The system of any of the preceding claims, wherein each of the perforations (50) tapers in the flow direction.

5. The system of any of the preceding claims, wherein the thickness of the perforated plate (20) is substantially equal to or less than 0.035 inches.

6. The system of any of the preceding claims, further comprising a support mesh (22) positioned adjacent the downstream surface of the perforated plate (20).

7. The system of claim 6, the support mesh (22) comprising woven wires.

8. The system of any of the preceding claims, the perforated plate (20) comprising an inverted cone shape.

9. The system of claim 8, further comprising a support mesh (22) positioned adjacent the downstream surface of the perforated plate (20), the support mesh (22) comprising an inverted cone shape.

10. The system of any of the preceding claims, further comprising an expander flange (26) at an upstream end of the perforated plate (20).

11. The system of claim 10, further comprising a reducer flange (28) at the downstream end of the perforated plate (20).

12. The system of any of the preceding claims, further comprising a first pressure probe (100) positioned on the pipeline (10) upstream of the perforated plate (20), a second pressure probe (102) positioned on the pipeline (10) downstream of the perforated plate (20), and a computing unit (104) configured to determine debris accumulation in the perforated plate (20) as a function of pressure measurements of the first pressure probe (100) and the second pressure probe (102).

13. The system of any of the preceding claims, further comprising sprayers (130) positioned downstream of the perforated plate (20) and directed upstream toward the perforated plate (20) and a drain port (120) positioned upstream of the perforated plate (20).
